# NEUE EUROPÄISCHE PATENTSCHRIFT

(11) **EP 3 040 713 B2**
(45) Veröffentlichungstag und Bekanntmachung des Hinweises auf die Entscheidung über den Einspruch: **04.08.2021**
(45) Hinweis auf die Patenterteilung: 04.04.2018
(21) Anmeldenummer: 14200549.5
(22) Anmeldetag: 30.12.2014
(51) Int. Cl.: G01N 23/18, G01N 23/083

(54) **Vorrichtung zur automatisierten Fehlererkennung an Werkstücken**
Device for automatically recognising errors on workpieces
Dispositif de reconnaissance automatisée d'erreur sur des pièces

(43) Veröffentlichungstag der Anmeldung: 06.07.2016
(73) Patentinhaber: VisiConsult X-ray Systems & Solutions GmbH, 23617 Stockelsdorf (DE)
(72) Erfinder: Hajo Schulenburg,, 23556 Lübeck (DE)
(74) Vertreter: Patentanwälte Vollmann Hemmer Lindfeld Partnerschaft mbB

(56) Entgegenhaltungen:
- EP-A1- 2 326 941
- EP-B1- 1 717 573
- DE-A1- 19 855 213
- DE-A1- 19 855 213
- DE-A1-102011 003 653
- DE-B- 1 252 939
- US-A- 5 541 856
- US-A- 5 848 118
- US-A1- 2008 298 538
- Bavendiek, Et Al.: "Durchsatzerhöhung in der industriellen Röntgenprüfung - Eine Kombination aus innovativem Prüfablauf und optimierter Bildauswertung", Deutsche Gesselschaft Für Zerstörungsfreie Prüfung Deutsche Gesselschaft Für Zerstörungsfreie Prüfung, Bamberg, pages 300-307, Bamberg [retrieved on 2019-01-15]

## Beschreibung

Die Erfindung betrifft eine Vorrichtung zur automatisierten Fehlererkennung an Werkstücken mit den in Anspruch 1 angegebenen Merkmalen.

Im Bereich der zerstörungsfreien Werkstoffprüfung zählt die Durchstrahlungsprüfung von Werkstücken mittels Röntgenstrahlen zu den am häufigsten angewendeten Prüfverfahren. Mögliche Einsatzgebiete einer solchen Durchstrahlungsprüfung sind zum Beispiel die Kontrolle von Guss- und Schmiedeteilen, bei denen mittels Durchstrahlung mit energiereichen Röntgenstrahlen sowohl oberflächliche Fehlstellungen an den zu prüfenden Werkstücken aber auch Fehlstellen innerhalb der Werkstücke in Folge unterschiedlicher Durchdringung der Werkstücke durch die Röntgenstrahlen ermittelt werden können.

Bei der Serien- und Massenfertigung von Werkstücken ist häufig die Durchstrahlungsprüfung jedes Werkstücks in einem fortlaufenden, stetigen Produktionsfluss integriert. Hierbei werden die gefertigten Werkstücke über ein Transportsystem einer Röntgenprüfanlage zugeführt, die sowohl innerhalb als auch am Ende einer Fertigungsstraße angeordnet sein kann. Ein mittels der Röntgenanlage erzeugtes Durchstrahlungsbild des Werkstücks wird automatisiert mit einem Referenzbild eines fehlerfreien Werkstücks verglichen, wobei das zu prüfende Werkstück bei fehlender Übereinstimmung von Durchstrahlungsbild und Referenzbild als fehlerhaft aus dem Produktionsfluss entfernt wird. Besondere Anforderungen bestehen hierbei hinsichtlich der Lagegenauigkeit des Werkstücks, welches in einer genau definierten Position zwischen einer Röntgenstrahlenquelle und einem Röntgenstrahlendetektor der Röntgenprüfanlage angeordnet sein muss, um zu verhindern, dass ein an sich makelloses Werkstück aufgrund einer mangelnden Lagegenauigkeit zwischen der Röntgenstrahlenquelle und dem Röntgenstrahlendetektor und einer damit einhergehenden Abweichung des mittels der Röntgenanlage erstellten Röntgenbildes des zu prüfenden Werkstücks von dem Referenzbild als fehlerhaft bzw. als Ausschuss beurteilt wird.

Eine diesbezügliche Lösung bietet ein in EP 1 717 573 A2 beschriebenes Verfahren, bei dem die dreidimensionale Lage der Werkstücke vor der Röntgenprüfung ermittelt wird, mit einem Referenzbild verglichen wird und die Lage der Werkstücke bei nicht Übereinstimmung von Lage- und Referenzbild mittels eines mechanischen Manipulators derart verändert wird, dass sich die Werkstücke in der Röntgenprüfanlage in der geforderten Position zwischen der Röntgenstrahlenquelle und dem Röntgenstrahlendetektor befinden. Durch diese Maßnahme wird die Anzahl der Fehldetektionen bei der Durchstrahlungsprüfung zwar verringert, es erweist sich aber als nachteilig, dass die gegebenenfalls erforderliche Umpositionierung der Werkstücke vor der Durchstrahlungsprüfung den Produktionsfluss in erheblicher Weise negativ beeinflusst und auch Anlagentechnisch aufgrund des erforderlichen Manipulators einen erheblichen Aufwand verlangt.

Aus US 5,541,856 A zählt es zum Stand der Technik, die Position des Werkstücks innerhalb der Röntgenanlage mittels Marken zu erkennen, um dann das Röntgensystem entsprechend zu positionieren. Dies erfolgt alles innerhalb eines Prüfraums, so dass die Röntgeneinrichtung erst ausgerichtet werden kann, wenn sich das Werkstück in Prüfposition befindet.

Insoweit günstiger ist die aus DE 12 52 939 B1 bekannte Anordnung, bei welcher die Lage des Werkstücks auf der Förderbahn mittels einer Messvorrichtung ermittelt und die Strahlungsquelle entsprechend quer zur Förderrichtung verfahren wird. Allerdings ist diese Anordnung nur für die Röntgenprüfung grober Blöcke geeignet, die sich nur in der Größe, nicht jedoch in der Form unterscheiden.

Aus US 2008/0298538 A1 zählt es zum Stand der Technik, ein Werkstück mittels Röntgenstrahlen abzuscannen, hierzu sind mehrere Röntgenstrahlendetektoren vorgesehen, welche mit einer Röntgenstrahlenquelle zusammenwirken, wobei das Werkstück zwischen der Röntgenprüfeinrichtung in mäanderförmigen Bahnen verfahren wird, um eine vollflächige Prüfung zu ermöglichen. Diese Anordnung ist für die Prüfung von Werkstücken in der Serienfertigung wenig geeignet.

Aus DE 198 55 213 A1 zählt es zum Stand der Technik, bei der Röntgenprüfung eines Werkstücks Röntgenstrahlenquelle und Röntgenstrahlenempfänger unabhängig voneinander zu bewegen, um eine beliebige Ausrichtung der Prüfebene zu ermöglichen, wie dies in der Medizintechnik vorteilhaft ist. Die Anordnung dient zur Erzeugung von 3D-Bildern, ist jedoch zur automatischen Werkstückprüfung so nicht geeignet.

Vor diesem Hintergrund liegt der Erfindung die Aufgabe zugrunde, eine verbesserteVorrichtung zur automatisierten Fehlererkennung an Werkstücken zu schaffen.

Gelöst wird diese Aufgabe durch eine Vorrichtung zur automatisierten Fehlererkennung an Werkstücken mit den in Anspruch 1 angegebenen Merkmalen. Vorteilhafte Weiterbildungen der Vorrichtung nach Anspruch 1 sind den Unteransprüchen, der nachfolgenden Beschreibung sowie der Zeichnung zu entnehmen. Hierbei können gemäß der Erfindung die in den Unteransprüchen angegebenen Merkmale jeweils für sich aber auch in technisch sinnvoller Kombination miteinander die Vorrichtung nach Anspruch 1 weiter ausgestalten.

Bei einem Verfahren zur automatisierten Fehlererkennung an Werkstücken, das nicht Gegenstand der Erfindung ist, wird eine Röntgenprüfanlage mit einer Röntgenstrahlenquelle und einem Röntgenstrahlendetektor verwendet. Die Röntgenprüfung erfolgt in einer definierten Stellung, das heißt in einer definierten räumlichen Position und räumlichen Ausrichtung des Werkstücks relativ zu der Röntgenstrahlenquelle und dem Röntgenstrahlendetektor, in der ein Röntgenbild des zu prüfenden Werkstücks aufgenommen wird und mit einem in einer Steuerungseinrichtung gespeicherten Referenzbild eines einwandfreien Werkstücks der zu prüfenden Art verglichen wird. Zuvor wird die Werkstückstellung optisch erfasst und eine eventuelle Abweichung von der definierten Stellung ermittelt.

Die Grundidee besteht darin, dass dann, wenn die Relativposition des Werkstücks zu der Röntgenstrahlenquelle und dem Röntgenstrahlendetektor von der definierten Stellung zwischen der Röntgenstrahlenquelle und dem Röntgenstrahlendetektor abweicht, die Röntgenstrahlenquelle und der Röntgenstrahlendetektor so verfahren werden, dass das Werkstück in der definierten Stellung zwischen der Röntgenstrahlenquelle und dem Röntgenstrahlendetektor angeordnet ist, also in der sich das Werkstück genau in der Relativposition zwischen der Röntgenstrahlenquelle und dem Röntgenstrahlendetektor befindet, in der sich auch das Referenzbauteil bei der Aufnahme des Referenzbildes befunden hat. Hinsichtlich der Prüfgenauigkeit unterscheidet sich diese Vorgehensweise nicht von der Genauigkeit, die bei der aus dem Stand der Technik bekannten Umpositionierung der Werkstücke mittels eines Manipulators erzielt wird. Da aber bei Verwendung dieses Verfahrens die Umpositionierung der Werkstücke vor der Röntgenprüfung nicht mehr erforderlich ist, können die Prüftakte, insbesondere bei gleichzeitigem Verfahren der Röntgenstrahlenquelle und des Röntgenstrahlendetektors, deutlich verkürzt werden, was das erfindungsgemäße Verfahren in besonderem Maße für die Inline-Prüfung aller Werkstücke in der Serien- oder Massenfertigung geeignet macht.

Im Hinblick auf eine Fehlererkennung bei unterschiedlichen Werkstücken kann neben der optischen Erfassung der Werkstückstellung auch eine optische Erfassung der Werkstückform vorgesehen sein, um so unterschiedliche Werkstücke identifizieren zu können. In diesem Fall sind typischerweise Referenzbilder aller zu prüfenden Werkstücke in einer Steuerungseinrichtung gespeichert bereitzuhalten, um das Röntgenbild des zu prüfenden Werkstücks mit einem Referenzbild des entsprechenden Werkstücks vergleichen zu können.

Dabei ist die Umgebung der Röntgenprüfanlage vor der von der Röntgenstrahlenquelle der Röntgenprüfanlage emitierten Röntgenstrahlung zu schützen. Insofern wird die Röntgenprüfung in einem gegenüber der Außenumgebung strahlendicht verschlossenen Prüfraum durchgeführt. Hierbei werden die zu prüfenden Werkstücke auf einer definierten Bahn und vorzugsweise auf einer Kreisbahn von einer ersten Position außerhalb des Prüfraums in den Prüfraum bewegt und nach der Röntgenprüfung vorzugsweise an anderer Stelle wieder aus dem Prüfraum herausbewegt. Bei dieser Vorgehensweise erfolgt die optische Erfassung der Werkstücke und die Ermittlung einer möglichen Abweichung der Werkstückstellung von der definierten Stellung in der ersten Position außerhalb des Prüfraums, so dass ein erstes Werkstück in dem Prüfraum der Röntgenprüfung unterzogen werden kann, während gleichzeitig die Werkstückstellung eines zweiten Bauteils optisch erfasst und dessen eventuelle Abweichung von der definierten Stellung ermittelt werden kann.

Da Strahlung reflektierende Oberflächen oder auch Oberflächenverunreinigungen an den zu prüfenden Werkstücken zu gewissen Ungenauigkeiten bei der optischen Erfassung der Werkstückstellung führen können, wird das Röntgenbild des vermeintlich in der definierten Stellung zwischen der Röntgenstrahlenquelle und dem Röntgenstrahlendetektor angeordneten Werkstücks bevorzugt einer softwaregestützten Nachkorrektur unterzogen. Hiermit ist allerdings eine nicht lineare zweidimensionale Verzerrung des aufgenommenen Bildes verbunden. Zweckmäßigerweise wird daher die so entstehende Abweichung des Bildes von dem Referenzbild mittels eines hierfür geeigneten Algorithmuses ermittelt und das Röntgenbild in eine im wesentlichen vollständige Übereinstimmung mit dem Referenzbild gebracht.

Die erfindungsgemäße Vorrichtung zur automatisierten Fehlererkennung an Werkstücken dient korrespondierend zu dem vorbeschrieben Verfahren zur automatisierten Fehlererkennung in Werkstücken zur Durchstrahlungsprüfung von Werkstücken mit Röntgenstrahlen und ist zu diesem Zweck mit einer Röntgenprüfanlage ausgestattet. Die Röntgenprüfanlage weist eine Röntgenstrahlenquelle und einen Röntgenstrahlendetektor auf. Als Röntgenstrahlenquelle können grundsätzlich alle für die Werkstoffprüfung eingesetzten Röntgenröhren verwendet werden, wobei die Art der Röntgenstrahlenquelle letztendlich von dem zu prüfenden Werkstück abhängt. Bei dem Röntgenstrahlendetektor handelt es sich um einen Bildwandler für Röntgenstrahlen. Auch hier können prinzipiell alle in der Werkstoffprüfung eingesetzten Röntgenstrahlendetektoren zum Einsatz kommen.

Des Weiteren ist die erfindungsgemäße Vorrichtung mit einem in dem Röntgenstrahlengang der Röntgenstrahlenquelle einbringbaren Werkstückträger ausgestattet. Dieser Werkstückträger ist derart ausgebildet, dass er außerhalb der Röntgenprüfanlage mit dem Werkstück bestückt werden kann und darauf folgend das Werkstück zu seiner Prüfposition in der Röntgenprüfanlage, das heißt in eine Position in den Strahlengang der Röntgenstrahlenquelle transportiert.

In der erfindungsgemäßen Vorrichtung erfolgt die Fehlererkennung an einem Werkstück durch den automatisierten Vergleich eines in der Röntgenprüfanlage gemachten Referenzbildes eines fehlerfreien Werkstücks mit dem Röntgenbild des zu prüfenden Werkstücks. Hierzu muss das zu prüfenden Werkstück zwischen der Röntgenstrahlenquelle und dem Röntgenstrahlendetektor exakt so angeordnet sein, wie das fehlerfreie Werkstück bei der Aufnahme des Referenzbildes angeordnet war. Insofern ist es erforderlich, die Stellung des zu prüfenden Werkstücks zu erfassen und Abweichungen der Werkstückstellung von der definierten Stellung des Werkstücks, das heißt der Werkstückstellung des zur Erstellung des Referenzbildes verwendeten Werkstücks zu ermitteln. Zu diesem Zweck weist die erfindungsgemäße Vorrichtung Mittel zum optischen Erfassen der Werkstückstellung und Ermitteln einer Abweichung der Werkstückstellung von einer definierten Stellung des Werkstücks zwischen der Röntgenstrahlenquelle und dem Röntgenstrahlendetektor auf. In diesem Zusammenhang ist zum optischen Erfassen der Werkstückstellung eine 3D-Lage Erkennungseinrichtung mit einem Kamerasystem und einer Laserquelle und zur Ermittlung einer Abweichung der Werkstückstellung von einer definierten Stellung des Werkstücks eine elektronische Auswerteinrichtung vorgesehen.

Die Besonderheit der erfindungsgemäßen Vorrichtung besteht darin, dass die Röntgenstrahlenquelle und der Röntgenstrahlendetektor jeweils in zumindest allen translatorischen Bewegungsfreiheitsgraden relativ zu dem Werkstückträger verfahrbar sind. Bei entsprechender Ausgestaltung des Werkstückträgers gestattet dieser, die Röntgenstrahlenquelle und den Röntgenstrahlendetektor relativ zu dem dazwischen angeordneten Werkstückträger mit dem zu prüfenden Werkstück so anzuordnen und auszurichten, dass sich das zu prüfende Werkstück exakt in der definierten Stellung zwischen der Röntgenstrahlenquelle und dem Röntgenstrahlendetektor befindet.

Um diese Anordnung und Ausrichtung von Röntgenstrahlenquelle und Röntgenstrahlendetektor zu ermöglichen, ist zweckmäßigerweise eine Steuerungseinrichtung vorgesehen, mit welcher die Bewegungen der Röntgenstrahlenquelle und des Röntgenstrahlendetektors auf Grundlage der von den Mitteln zum optischer Erfassen der Werkstückstellung und Ermitteln einer Abweichung des Werkstückstellung von einer definierten Stellung des Werkstücks zwischen der Röntgenstrahlenquelle und dem Röntgenstrahlendetektor ermittelten Ergebnisse derart steuerbar sind, dass sich das Werkstück in der definierten Stellung zwischen der Röntgenstrahlenquelle und dem Röntgenstrahlendetektor befindet.

Die hierzu erforderliche Bewegbarkeit der Röntgenstrahlenquelle und des Röntgenstrahlendetektors wird zweckmäßigerweise dadurch erreicht, dass sowohl die Röntgenstrahlenquelle als auch der Röntgenstrahlendetektor mit einer zumindest in Richtung aller Raumkoordinaten verfahrbaren Positioniereinrichtung verbunden sind. Als Positioniereinrichtung ist vorzugsweise ein Manipulator vorgesehen, das heißt, sowohl die Röntgenstrahlenquelle als auch der Röntgenstrahlendetektor sind bevorzugt an einem vorzugsweise gemeinsamen Manipulator angeordnet. Weiter bevorzugt kann es sich bei diesem Manipulator um ein Knickarmmanipulator handeln, mit dem sowohl die Röntgenstrahlenquelle als auch der Röntgenstrahlendetektor in der gewünschten Weise bewegt werden. Hierbei kann der Knickarmmanipulator einen aus dem medizinischen Bereich bekannten C-Bogen tragen, an dem die Röntgenstrahlenquelle und der Röntgenstrahlendetektor einander gegenüberliegend angeordnet sind.

Um die Umgebung der Röntgenprüfanlage nicht einer schädlichen Röntgenstrahlenbelastung auszusetzen, ist die Röntgenprüfanlage mit der Röntgenstrahlenquelle und dem Röntgenstrahlendetektor in einem strahlengeschützten Prüfraum angeordnet. Dieser Prüfraum wird typischerweise von einer röntgenstrahlenundurchlässigen Kapselung gebildet, welche die Röntgenprüfanlage im Wesentlichen vollständig umgibt.

Als Werkstückträger der erfindungsgemäßen Vorrichtung ist vorteilhaft ein Transportsystem vorgesehen, mit welchem ein auf dem Transportsystem gelagertes Werkstück auf einem definierten Bewegungsweg zumindest von einer Einlassposition außerhalb des Prüfraums nach innerhalb des Prüfraums bewegbar ist. Das Transportsystem kann als Transportmittel einen Unstetigförderer oder einen Stetigförderer zum Transport der Werkstücke aufweisen, wobei insbesondere bei Einsatz der erfindungsgemäßen Vorrichtung zur Inline-Prüfung aller Werkstücke in einer Produktionsstraße ein stetig Förderer bevorzugt wird.

Indem die Werkstücke mit dem Transportsystem auf einem definierten Bewegungsweg nach innerhalb des Prüfraums bewegt werden, kann von der Lagerungsposition des Werkstücks auf dem Transportsystem außerhalb des Prüfraums auf die spätere Werkstückstellung zwischen der Röntgenstrahlenquelle und dem Röntgenstrahlendetektor geschlossen werden. Insofern können, wie es bei der erfindungsgemäßen Vorrichtung vorgesehen ist, die Mittel zum optischen Erfassen der Werkstückstellung und Ermitteln einer Abweichung der Werkstückstellung von einer definierten Stellung außerhalb des Prüfraums im Bereich der Einlassposition angeordnet sein.

Bevorzugt erstreckt sich das Transportsystem von der Einlassposition außerhalb des Prüfraums durch den Prüfraum zu einer Auslassposition außerhalb des Prüfraums. Diese Ausgestaltung ist ebenfalls insbesondere dann von Vorteil, wenn die erfindungsgemäße Vorrichtung bei der Serien- oder Massenfertigung zur Inline-Prüfung aller Werkstücke in einer Produktionsstraße eingesetzt wird.

Weiter vorteilhaft kann als Transportsystem ein Drehtisch vorgesehen sein, welcher so angeordnet ist, dass immer zumindest ein Abschnitt des Drehtisches außerhalb des Prüfraums angeordnet ist und ein Abschnitt des Drehtisches innerhalb des Prüfraums angeordnet ist. Der Drehtisch kann somit zumindest zwei zu prüfende Werkstücke aufnehmen, die zweckmäßigerweise derart auf dem Drehtisch angeordnet sind, dass ein außerhalb des Prüfraums auf den Drehtisch überführtes Werkstück durch Drehung des Drehtisches in eine Stellung zwischen der Röntgenstrahlenquelle und dem Röntgenstrahlendetektor innerhalb des Prüfraums bewegt wird, wobei dann während der Röntgenprüfung des in dem Prüfraum befindlichen Werkstücks auf einem außerhalb des Prüfraums befindlichen Abschnitt ein weiteres Werkstück überführt werden kann und die Werkstückstellung und die Abweichung der Werkstückstellung von einer definierten Stellung des Werkstücks zwischen der Röntgenstrahlenquelle und dem Röntgenstrahlendetektor ermittelt werden kann.

Um mit der erfindungsgemäßen Vorrichtung möglichst kurze Prüfintervalle erzielen zu können, ist es besonders günstig, wenn der Drehtisch drei Abschnitte aufweist, welche jeweils in einem Winkel von 120° zueinander angeordnet sind. Hierbei dient jeder der drei Abschnitte zur Aufnahme eines zu prüfenden Werkstücks. Die Anordnung des Drehtisches ist hierbei zweckmäßigerweise derart, dass sich einer der Abschnitte innerhalb des Prüfraums befindet, während die beiden anderen Abschnitte des Drehtisches außerhalb des Prüfraums angeordnet sind. Bei Drehung des Drehtisches befindet sich hierbei zyklisch wechselnd jeweils einer der Abschnitte des Drehtisches in der Prüfposition innerhalb des Prüfraums, ein zweiter in einer Position außerhalb des Prüfraums, in der ein zuvor geprüftes Werkstück abgeführt wird und ein dritter Abschnitt in einer zweiten Position außerhalb des Prüfraums, in der der Drehtisch mit den Werkstücken bestückt wird.

Als Alternative zu dem Drehtisch kann vorteilhaft auch ein Förderband als Transportsystem verwendet werden, welches durch den Prüfraum hindurchführt. Hierbei ist die Ausrichtung des Förderbandes prinzipiell beliebig. So kann sich das Förderband gerade oder in Form einer Kurve durch den Prüfraum hindurch erstrecken.

Bei einem Förderband als Transportsystem kann es zweckdienlich sein, wenn, wie es gemäß einer weiteren vorteilhaften Ausgestaltung der erfindungsgemäßen Vorrichtung vorgesehen ist, die Röntgenprüfanlage in Richtung parallel zum Förderband bewegbar ist. Dies ermöglicht es, dass Förderband nicht getaktet sondern kontinuierlich durchlaufend zu betreiben, wobei es dann die Mitbewegbarkeit der Röntgenprüfanlage parallel zu dem Förderband gestattet, die einzelnen auf dem Förderband befindlichen Werkstücke während des Durchlaufs der Werkstücke auf dem Förderband durch den Prüfraum einer Röntgenprüfung zu unterziehen.

Bei Verwendung eines strahlengeschützten Prüfraums weist dieser typischerweise Öffnungen auf. Zweckmäßigerweise sind diese Öffnungen während der Röntgenprüfung eines Werkstücks automatisch röntgenstrahlungsverschließbar. Demzufolge ist jede an dem Prüfraum ausgebildete Öffnung ein röntgenstrahlungsdichter Schließkörper zugeordnet, der an dem Prüfraum derart angeordnet ist und in Abhängigkeit von der Art der Ausgestaltung des Transportsystems derart ausgebildet ist, dass er die Öffnung während des Einsatzes der Röntgenprüfanlage so verschließt, dass über die Öffnung keine Röntgenstrahlung in die Außenumgebung des Prüfraums gelangen kann. Anstelle einer verschließbaren Öffnung kann auch ein Tunnel vorgesehen sein, der so ausgebildet ist, dass Röntgenstrahlen aus dem Prüfraum durch diesen Tunnel nicht austreten können. Eine solche Tunnelanordnung ist insbesondere bei Verwendung eines Förderbandes als Transportsystem vorteilhaft.

Nachfolgend ist die Erfindung anhand von in der Zeichnung dargestellten Ausführungsbeispielen näher erläutert. In der Zeichnung zeigt jeweils in einer stark vereinfachten Prinzipskizze:
- Fig. 1: in einer Draufsicht eine Vorrichtung zur automatisierten Fehlererkennung an Werkstücken gemäß einer ersten Ausgestaltung und
- Fig. 2: in einer Draufsicht eine Vorrichtung zur automatisierten Fehlererkennung an Werkstücken gemäß einer zweiten, nicht zur Erfindung gehörigen Ausgestaltung.

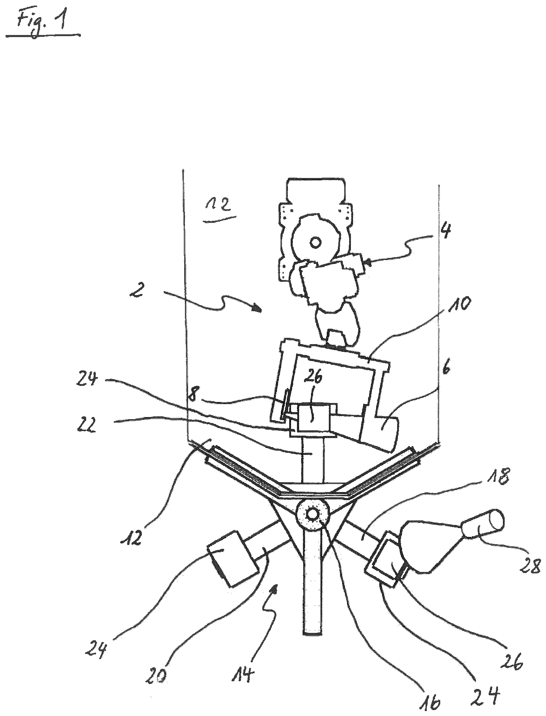

Die in Fig. 1 dargestellte Vorrichtung weist eine Röntgenprüfanlage 2 auf. Die wesentlichen Bestandteile dieser Röntgenprüfanlage 2 sind ein Manipulator 4 in Form eines Knickarmmanipulators, eine Röntgenstrahlenquelle 6 sowie ein Röntgenstrahlendetektor 8. An seinem freien Ende trägt der Manipulator 4 einen C-Bogen 10, an dem im Bereich seiner beiden freien Enden einander gegenüberliegend die Röntgenstrahlenquelle 6 und der Röntgenstrahlendetektor 8 angeordnet sind.

Die Röntgenprüfanlage 2 ist in einem Prüfraum 12 angeordnet, von dem in Fig. 1 der besseren Übersichtlichkeit wegen nur ein Teil seiner Außenwandung dargestellt ist, der aber die Röntgenprüfanlage 2 vollständig ummantelt, so dass bei Betrieb der Röntgenprüfanlage 2 keine Röntgenstrahlung aus dem Prüfraum 12 in die Außenumgebung des Prüfraums 12 gelangen kann.

Ein weiterer Bestandteil der in Fig. 1 dargestellten Vorrichtung ist ein Drehtisch 14. Dieser Drehtisch 14 ist um eine vertikal ausgerichtete Drehachse drehbar, welche von einer außenseitig der Prüfraums 12 angeordnete Trägersäule 16 für den Drehtisch 14 gebildet wird. Der Drehtisch 14 weist drei Abschnitte 18, 20 und 22 auf, die ausgehend von der Trägersäule 16 sternförmig auskragen, wobei sie jeweils um einen Winkel von 120° versetzt zueinander angeordnet sind. An den freien Enden der Abschnitte 18, 20 und 22 ist jeweils eine Werkstückaufnahme 24 für ein Werkstück 26 ausgebildet.

In Fig. 1 befindet sich das auf der Werkstückaufnahme 24 des Abschnitts 18 des Drehtisches 14 gelagerte Werkstück 26 in einer Einlassposition außenseitig des Prüfraums 12. Oberhalb dieser Einlassposition sind Mittel zum optischen Erfassen der Werkstückstellung in Form eines Kamerasystems mit einer Laserquelle angeordnet. Diese Mittel sind in der Fig. 1 der Einfachheit halber in Form eines Zylinders 28 dargestellt. Mit diesen Mitteln wird die dreidimensionale Lage des Werkstücks 26 auf der Werkstückaufnahme 24 ermittelt. Die so erfassten Lagedaten werden anschließend an eine in der Fig. 1 nicht dargestellten Auswerteeinrichtung weitergeleitet, wo eine gegebenenfalls bestehende Abweichung der Werkstückstellung von einer definierten Stellung auf der Werkstückaufnahme 24 ermittelt wird.

Anschließend wird der Drehtisch 14 derart gedreht, dass der Abschnitt 18 des Drehtisches 14 durch eine an dem Prüfraum 12 ausgebildete Öffnung, die aus Fig. 1 nicht ersichtlich ist, in die Prüfposition in dem Prüfraum 12 geschwenkt wird, in welcher sich in Fig. 1 der Abschnitt 22 des Drehtisches 14 befindet. In der Prüfposition findet dann die Röntgenprüfung des auf der Werkstückaufnahme 24 des Abschnitts 18 gelagerten Werkstücks 26 statt, worauf später noch ausführlicher eingegangen wird.

Der Abschnitt 22 in Fig. 1 wird bei der Verschwenkung des Abschnitts 18 durch die an dem Prüfraum 12 ausgebildete Öffnung nach außerhalb des Prüfraums 12 in eine Entnahmeposition bewegt, in der das auf der Werkstückaufnahme 24 des Abschnitts 22 gelagerte Werkstück 26 entnommen werden kann oder auf ein weiteres, nicht dargestelltes Transportsystem, welches nicht Teil der Vorrichtung zur automatisierten Fehlererkennung an Werkstücken 26 ist, überführt werden kann.

Zur Röntgenprüfung des in dem Prüfraum 12 befindlichen Werkstücks 26 (in Fig. 1 das auf der Werkstückaufnahme 24 des Abschnitts 22 gelagerte Werkstück 26) wird der Manipulator 4 auf der Grundlage der von der Auswerteeinrichtung ermittelten Abweichung der Werkstückstellung von einer definierten Stellung auf der Werkstückaufnahme 24 von einer in Fig. 1 ebenfalls nicht dargestellten Steuerungseinrichtung derart gesteuert, dass der C-Bogen 10 in eine Position bewegt wird, in der das Werkstück 26 in der definierten Stellung zwischen der Röntgenstrahlenquelle 6 und dem Röntgenstrahlendetektor 8 angeordnet ist.

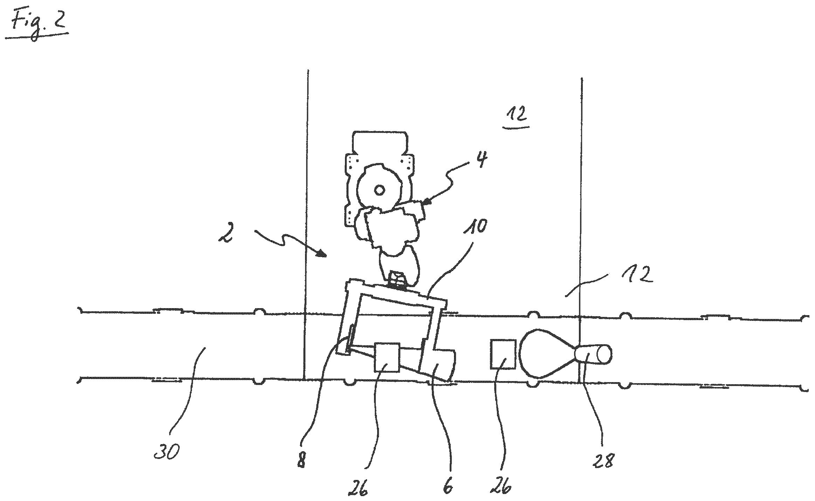

Die in Fig. 2 dargestellte Vorrichtung stimmt in vielen Aspekten mit der in Fig. 1 dargestellten Vorrichtung überein, daher wird nachfolgend lediglich auf die Bauteile und Baugruppen eingegangen, die einen Unterschied zu der in Fig. 1 dargestellten Vorrichtung darstellen. So weist die Vorrichtung nach Fig. 2 anstelle eines Drehtisches ein Förderband 30 als Transportsystem für die Werkstücke 26 auf. Das Förderband 30 erstreckt sich in gerader Linie durch einen in Fig. 2 nicht im Einzelnen dargestellten Prüfraum 12. Auf dem Förderband 30 werden die Werkstücke 26 in Fig. 2 von rechts nach links von außerhalb des Prüfraums 12 in den Prüfraum 12 transportiert und nach einer in dem Prüfraum 12 stattfindenden Röntgenprüfung wieder hinaustransportiert. Die zur Röntgenprüfung verwendete Röntgenprüfanlage 2 entspricht der Röntgenprüfanlage nach Fig. 1. Auch die Bewegungssteuerung der Röntgenprüfanlage 2 stimmt mit der Bewegungssteuerung der Röntgenprüfanlage 2 der Vorrichtung nach Fig. 1 überein, wobei allerdings bei der in Fig. 2 dargestellten Vorrichtung, anders als bei der Erfindung vorgesehen, die Mittel zum optischen Erfassen der Werkstückstellung in Transportrichtung vor der Röntgenprüfanlage 2 innerhalb des Prüfraums und oberhalb des Förderbandes 30 angeordnet sind.

Die Funktion der anhand von Fig. 2 dargestellten Einrichtung entspricht im Wesentlichen der anhand von Fig. 1 vorbeschriebenen. Die 3D-Lageerkennung des Werkstücks 26 erfolgt innerhalb des Prüfraums 12, könnte jedoch auch wie bei der Erfindung davor erfolgen. Entsprechend der nach Auswertung der Abweichung von der mittels der optischen Einrichtung zur Lageerfassung 28 erfassten Position des Werkstücks 26 auf dem Förderband 30 zu einer zuvor definierten Werkstückposition, wird der Röntgen C-Bogen 10 mittels des Manipulators 4 derart in Bezug auf das Förderband 30 bzw. darauf befindliche Werkstück 26 verfahren, dass die Relativposition zwischen Werkstück 26, Röntgenstrahlenquelle 6 und Röntgenstrahldetektor 8 so ist, als würde sich das Werkstück 26 in der definierten Position befinden. Hierdurch wird mittels der Röntgeneinrichtung ein Röntgenbild des Werkstücks erstellt, welches das Werkstück in seiner definierten Stellung zeigt und somit direkt mit einem Sollbild verglichen werden kann, um gegebenenfalls vorhandene Abweichungen festzustellen, durch einen Alarm darauf hinzuweisen oder automatisch dieses Werkstück auszusondern.

Die anhand von Fig. 2 dargestellte Anordnung ist stationär, das heißt, dass sowohl zur Positionserfassung des Werkstücks 26, als auch zur Erstellung des Röntgenbildes, das Förderband 30 anzuhalten ist.

Gemäß der Erfindung kann es jedoch vorgesehen sein, die Werkstückprüfung auch bei durchlaufendem Förderband durchzuführen, dann sind zumindest der Röntgen C-Bogen 10, gegebenenfalls jedoch auch die Vorrichtung 28 zur optischen Lageerfassung mit dem Förderband 30 mitbewegbar, so dass durch diese Relativbewegung das Werkstück 26 zumindest für den erforderlichen Zeitraum quasi stationär im Bezug auf die Vorrichtung 28 bzw. die Röntgeneinrichtung 6, 8 angeordnet ist.

## Patentansprüche

1. Vorrichtung zur automatisierten Fehlererkennung an Werkstücken (26) mit einer in einem strahlengeschützten Prüfraum (12) angeordneten Röntgenprüfanlage (2), welche eine Röntgenstrahlenquelle (6), einen Röntgenstrahlendetektor (8) und einen in dem Röntgenstrahlengang der Röntgenstrahlenquelle (6) einbringbaren Werkstückträger aufweist, und mit Mitteln zum optischen Erfassen der Werkstückstellung und mit einer elektronischen Auswerteinrichtung zum Ermitteln einer Abweichung der Werkstückstellung von einer definierten Stellung des Werkstücks (26) zwischen der Röntgenstrahlenquelle (6) und dem Röntgenstrahlendetektor (8), wobei die Röntgenstrahlenquelle (6) und der Röntgenstrahlendetektor (8) jeweils in zumindest allen translatorischen Bewegungsfreiheitsgraden relativ zu dem Werkstückträger verfahrbar sind, **dadurch gekennzeichnet, dass** die Mittel zum optischen Erfassen der Werkstückstellung in Form eines Kamerasystems mit einer Laserquelle außerhalb des strahlengeschützten Prüfraums (12) im Bereich der Einlassposition angeordnet sind.

2. Vorrichtung nach Anspruch 1, **dadurch gekennzeichnet, dass** eine Steuerungseinrichtung vorgesehen ist, mit welcher die Bewegungen der Röntgenstrahlenquelle (6) und des Röntgenstrahlendetektors (8) auf Grundlage der von den Mitteln zum optischen Erfassen der Werkstückstellung und Ermitteln einer Abweichung der Werkstückstellung von einer definierten Stellung des Werkstücks (26) zwischen der Röntgenstrahlenquelle (6) und dem Röntgenstrahlendetektor (8) ermittelten Ergebnisse derart steuerbar sind, dass sich das Werkstück (26) in der definierten Stellung zwischen der Röntgenstrahlenquelle (6) und dem Röntgenstrahlendetektor (8) befindet.

3. Vorrichtung nach einem der Ansprüche 1 und 2, **dadurch gekennzeichnet, dass** sowohl die Röntgenstrahlenquelle (6) als auch der Röntgenstrahlendetektor (8) an einem Manipulator (4) angeordnet sind.

4. Vorrichtung nach einem der vorhergehenden Ansprüche, **dadurch gekennzeichnet, dass** ein Transportsystem vorgesehen ist, mit welchem ein auf dem Transportsystem gelagertes Werkstück (26) auf einem definierten Bewegungsweg zumindest von einer Einlassposition außerhalb des Prüfraums (12) nach innerhalb des Prüfraums (12) bewegbar ist.

5. Vorrichtung nach Anspruch 4, **dadurch gekennzeichnet; dass** die elektronische Auswerteinrichtung zum Ermitteln einer Abweichung der Werkstückstettung von einer definierten Stellung zwischen der Röntgenstrahlenquelle (6) und dem Röntgenstrahlendetektor (8) außerhalb des Prüfraums (12) angeordnet ist.

6. Vorrichtung nach einem der Ansprüche 4 oder 5, **dadurch gekennzeichnet, dass** sich das Transportsystem von der Einlassposition außerhalb des Prüfraums (12) durch den Prüfraum (12) zu einer Auslassposition außerhalb des Prüfraums (12) erstreckt.

7. Vorrichtung nach einem der Ansprüche 4 bis 6, **dadurch gekennzeichnet, dass** als Transportsystem ein Drehtisch (14) vorgesehen ist, welcher derart angeordnet ist, dass immer zumindest ein Abschnitt (18, 20, 22) des Drehtisches (14) außerhalb des Prüfraums (12) angeordnet ist und ein Abschnitt (18, 20, 22) des Drehtisches (14) innerhalb des Prüfraums (12) angeordnet ist.

8. Vorrichtung nach Anspruch 7, **dadurch gekennzeichnet, dass** der Drehtisch (14) drei Abschnitte (18, 20, 22) aufweist, welche jeweils in einem Winkel von 120° zueinander angeordnet sind.

9. Vorrichtung nach einem der Ansprüche 4 bis 6, **dadurch gekennzeichnet, dass** das Transportsystem ein Förderband (30) ist, welches durch den Prüfraum hindurchführt.

10. Vorrichtung nach Anspruch 9, **dadurch gekennzeichnet, dass** die Röntgenprüfanlage (2) in Richtung parallel zum Förderband (30) bewegbar ist.

11. Vorrichtung nach einem der Ansprüche 4 bis 10, **dadurch gekennzeichnet, dass** der Prüfraum (12) Öffnungen für das Transportsystem aufweist, welche während der Röntgenprüfung eines Werkstücks (26) automatisch strahlungsdicht verschließbar sind.

## Claims

1. A device for the automated error recognition on workpieces (26), with an X-ray examining facility (2) which is arranged in a radiation-protected examining space (12) and which comprises an X-ray beam source (6), an X-ray beam detector (8) and a workpiece carrier which can be brought in the X-ray path of the X-ray beam source (6), and with means for the optical detection of the workpiece position and with an electronic evaluation device for determining a deviation of the workpiece position from a defined position of the workpiece (26) between the X-ray beam source (6) and the X-ray beam detector (8), wherein the X-ray beam source (6) and the X-ray beam detector (8) are displaceable relative to the workpiece carrier in at least all translatory movement degrees of freedom, **characterised in that** the means for the optical detection of the workpiece position in the form of a camera system with a laser source are arranged outside the radiation-protected examining space (12) in the region of the inlet position.

2. A device according to claim 1, **characterised in that** a control device is provided, with which the movements of the X-ray beam source (6) and of the X-ray beam detector (8) can be controlled on the basis of the results which are determined by the means for the optical detection of the workpiece position and from determining a deviation of the workpiece position from a defined position of the workpiece (26) between the X-ray beam source (6) and the X-ray beam detector (8), in a manner such that the workpiece (26) is located in the defined position between the X-ray beam source (6) and the X-ray beam detector (8).

3. A device according to one of the claims 1 and 2, **characterised in that** the X-ray beam source (6) as well as the X-ray beam detector (8) are arranged on a manipulator (4).

4. A device according to one of the preceding claims, **characterised in that** a transport system is provided, with which a workpiece (26) which is mounted on the transport system is movable on a defined movement path at least from an inlet position outside the examining space (12) to inside the examining space (12).

5. A device according to claim 4, **characterised in that** the electronic evaluation device for determining a deviation of the workpiece position from a defined position between the X-ray beam source (6) and the X-ray beam detector (8) is arranged outside the examining space (12).

6. A device according to one of the claims 4 or 5, **characterised in that** the transport system extends from the inlet position outside the examining space (12) through the examining space (12) to an outlet position outside the examining space (12).

7. A device according to one of the claims 4 to 6, **characterised in that** a rotary table (14) is provided as a transport system, said rotary table being arranged in a manner such that always at least one section (18, 20, 22) of the rotary table (14) is arranged outside the examining space (12) and a section (18, 20, 22) of the rotary table (14) is arranged within the examining space (12).

8. A device according to claim 7, **characterised in that** the rotary table (14) comprises three sections (18, 20, 22) which are each arranged at an angle of 120° to one another.

9. A device according to one of the claims 4 to 6, **characterised in that** the transport system is a conveying belt (30) which is led through the examining space.

10. A device according to claim 9, **characterised in that** the X-ray examining facility (2) is movable in a direction parallel to the conveying belt (30).

11. A device according to one of the claims 4 to 10, **characterised in that** the examining space (12) comprises openings for the transport system which are automatically closable in a radiation-tight manner during the X-ray examination of a workpiece (26).

## Revendications

1. Dispositif de reconnaissance automatisée de défauts sur des pièces (26), comprenant une installation de contrôle par rayons X (2) disposée dans une chambre d'essai (12) protégée contre les rayonnements, qui comporte une source de rayons X (6), un détecteur de rayons X (8) et un porte-pièce pouvant être inséré dans le trajet de rayonnement X de la source de rayons X (6), et comprenant des moyens pour la détection optique de la position de la pièce et un dispositif d'évaluation électronique pour déterminer un écart de la position de la pièce par rapport à une position définie de la pièce (26) entre la source de rayons X (6) et le détecteur de rayons X (8), la source de rayons X (6) et le détecteur de rayons X (8) étant déplaçables respectivement dans au moins tous les degrés de liberté de mouvement en translation par rapport au porte-pièce, **caractérisé en ce que** les moyens pour la détection optique de la position de la pièce sont disposés sous la forme d'un système de caméra doté d'une source laser à l'extérieur de la chambre d'essai (12) protégée contre les rayonnements dans la zone de la position d'entrée.

2. Dispositif selon la revendication 1, **caractérisé en ce qu'**est prévu un dispositif de commande destiné à commander les mouvements de la source de rayons X (6) et du détecteur de rayons X (8) sur la base des résultats déterminés par les moyens de détection optique de la position de la pièce et de détermination d'un écart de position de la pièce par rapport à une position définie de la pièce (26) entre la source de rayons X (6) et le détecteur de rayons X (8), de telle sorte que la pièce (26) se trouve dans la position définie entre la source de rayons X (6) et le détecteur de rayons X (8).

3. Dispositif selon l'une des revendications 1 et 2, **caractérisé en ce que** la source de rayons X (6) et le détecteur de rayons X (8) sont disposés sur un manipulateur (4).

4. Dispositif selon l'une des revendications précédentes, **caractérisé en ce qu'**est prévu un système de transport destiné à déplacer une pièce (26) logée sur le système de transport sur une trajectoire de mouvement définie, au moins depuis une position d'entrée à l'extérieur de la chambre d'essai (12) vers l'intérieur de la chambre d'essai (12).

5. Dispositif selon la revendication 4, **caractérisé en ce que** le dispositif d'évaluation électronique pour la détermination d'un écart de position de la pièce par rapport à une position définie entre la source de rayons X (6) et le détecteur de rayons X (8) est disposé à l'extérieur de la chambre d'essai (12).

6. Dispositif selon l'une des revendications 4 ou 5, **caractérisé en ce que** le système de transport s'étend de la position d'entrée à l'extérieur de la chambre d'essai (12), à travers la chambre d'essai (12), jusqu'à une position de sortie à l'extérieur de la chambre d'essai (12).

7. Dispositif selon l'une des revendications 4 à 6, **caractérisé en ce qu'**est prévue comme système de transport une table rotative (14) qui est disposée de façon à toujours avoir au moins une partie (18, 20, 22) de la table rotative (14) située à l'extérieur de la chambre d'essai (12) et une partie (18, 20, 22) de la table rotative (14) située à l'intérieur de la chambre d'essai (12).

8. Dispositif selon la revendication 7, **caractérisé en ce que** la table rotative (14) comporte trois parties (18, 20, 22) qui sont disposées respectivement de manière à former entre elles un angle de 120°.

9. Dispositif selon l'une des revendications 4 à 6, **caractérisé en ce que** le système de transport est une bande transporteuse (30) qui traverse la chambre d'essai.

10. Dispositif selon la revendication 9, **caractérisé en ce que** l'installation de contrôle par rayons X (2) est déplaçable dans une direction parallèle à la bande transporteuse (30).

11. Dispositif selon l'une des revendications 4 à 10, **caractérisé en ce que** la chambre d'essai (12) comporte des ouvertures pour le système de transport, lesquelles sont automatiquement verrouillables de manière étanche aux rayonnements pendant le contrôle par rayons X d'une pièce (26).
